# FASCICULE DE BREVET EUROPEEN

(11) **EP 1 626 170 B1**
(45) Date de publication et mention de la délivrance du brevet: **25.04.2007**
(21) Numéro de dépôt: 05291665.7
(22) Date de dépôt: 04.08.2005
(51) Int. Cl.: F02C 3/067, F01D 1/26, F01D 5/02, F02K 3/072, F02C 7/36

(54) **Turbomachine à soufflantes contrarotatives**
Turbomaschine mit gegenläufigem Gebläse
Turbomachine with counter-rotating fan

(30) Priorité: 12.08.2004 FR 0408836
(43) Date de publication de la demande: 15.02.2006
(73) Titulaire: SNECMA, 75015 Paris (FR)
(72) Inventeur: Brault, Michel, 91800 Boussy-Saint-Antoine (FR); Taillant, Jean-Claude, 77000 Vaux-le-Penil (FR)
(74) Mandataire: Joly, Jean-Jacques

(56) Documents cités:
- EP-A- 0 298 014
- EP-A- 0 521 379
- EP-A- 1 403 485
- US-A- 4 375 906

## Description

### Arrière-plan de l'invention

La présente invention se rapporte au domaine général des turbomachines comportant deux soufflantes contrarotatives montées à l'avant. Elle vise plus particulièrement un arrangement particulier d'une turbomachine à soufflantes contrarotatives permettant de faciliter le montage et le démontage des différents corps qui la compose.

Dans les turbomachines classiques à grand taux de dilution, la section de soufflante se compose d'une unique rangée d'aubes mobiles à grand diamètre. La vitesse périphérique en tête d'aube est proportionnelle à ce diamètre et à la vitesse de rotation de la soufflante. Or, pour obtenir un bon rendement, cette vitesse périphérique doit être inférieure à la vitesse du son. Ceci peut être obtenu en intercalant un réducteur entre l'arbre d'entraînement des aubes et la soufflante. Cependant, un réducteur augmente la masse du moteur et la turbomachine présente souvent un rendement faible pour une consommation spécifique élevée.

Afin d'augmenter le rendement et de diminuer la consommation spécifique, il est connu d'équiper la section de soufflante de la turbomachine de deux rangées d'aubes (c'est-à-dire de deux soufflantes) espacées axialement l'une de l'autre et entraînées chacune par un arbre basse-pression sans interposition d'un réducteur. Dans ce type de turbomachine, chaque soufflante contribue de manière quasiment identique à la propulsion. On connaît ainsi le document US 4,860,537 dans lequel la turbomachine utilise des sections de turbine contrarotatives (c'est-à-dire tournant dans des directions opposées) qui entraînent des soufflantes également contrarotatives.

Les turbomachines à soufflantes contrarotatives connues de l'art antérieur, telles que celles décrites dans les documents EP 0 521 379 et EP 1 403 485, posent des problèmes de montage et de démontage des différents éléments qui les composent. Notamment, les opérations de montage et de démontage de l'arbre de la soufflante arrière sont rendues quasiment impossible par la disposition particulière des systèmes de fixation de cet arbre de soufflante arrière sur l'arbre d'entraînement basse-pression approprié. Par ailleurs, l'alimentation en huile de refroidissement et de lubrification des paliers à roulement qui sont montés entre les arbres des soufflantes avant et arrière s'avère également délicate à réaliser.

### Objet et résumé de l'invention

La présente invention a donc pour but principal de pallier de tels inconvénients en proposant une turbomachine telle que définie par la revendication 1. entraînant en rotation des premier et second arbres basse-pression, respectivement, et une section de soufflante comportant une première rangée d'aubes de soufflante montées sur un arbre de soufflante avant qui est relié à une extrémité amont du premier arbre basse-pression, et une seconde rangée d'aubes de soufflante espacées axialement de la première rangée et montées sur un arbre de soufflante arrière qui est relié à une extrémité amont du second arbre basse-pression, caractérisée en ce que l'arbre de soufflante avant est relié à l'extrémité amont du premier arbre basse-pression par l'intermédiaire d'un manchon démontable de transmission de couple.

L'adaptation d'un manchon démontable entre l'arbre de soufflante avant et le premier arbre basse-pression permet ainsi de faciliter le montage et le démontage des arbres basse-pression par l'arrière de la turbomachine. Notamment, en démontant uniquement ce manchon, il est possible de démonter par l'arrière les turbines d'entraînement des arbres de soufflante sans avoir à démonter les arbres de soufflante.

Selon une caractéristique avantageuse, le manchon démontable et l'arbre de soufflante avant forment une cavité d'alimentation en huile pour la lubrification et le refroidissement de paliers à roulement montés entre les arbres de soufflante avant et arrière.

La présence du manchon démontable permet donc d'alimenter correctement en huile les paliers à roulement qui sont montés entre les deux arbres de soufflante.

Le manchon démontable peut être relié à l'extrémité amont du premier arbre basse-pression et à l'arbre de soufflante avant par des systèmes de cannelures.

De plus, le manchon démontable peut être fixé sur le premier arbre basse-pression par un écrou serré sur l'extrémité amont du premier arbre basse-pression.

Selon une autre caractéristique avantageuse, le manchon démontable présente, à une extrémité amont, une bride annulaire en appui axial avec un épaulement radial complémentaire de l'arbre de soufflante avant.

Dans ce cas, la bride annulaire du manchon démontable et l'épaulement radial complémentaire de l'arbre de soufflante avant peuvent être maintenus en appui axial par un système de vis/écrou.

L'arbre de soufflante arrière peut être fixé sur le second arbre basse-pression par un écrou serré sur l'extrémité amont dudit second arbre basse-pression et accessible lorsque ledit manchon est démonté.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue générale illustrant le principe de fonctionnement d'une turbomachine à soufflantes contrarotatives ;
- la figure 2 est une vue partielle en coupe longitudinale d'une turbomachine selon l'invention ; et
- la figure 3 est une vue agrandie du manchon démontable équipant la turbomachine de la figure 2.

### Description détaillée d'un mode de réalisation

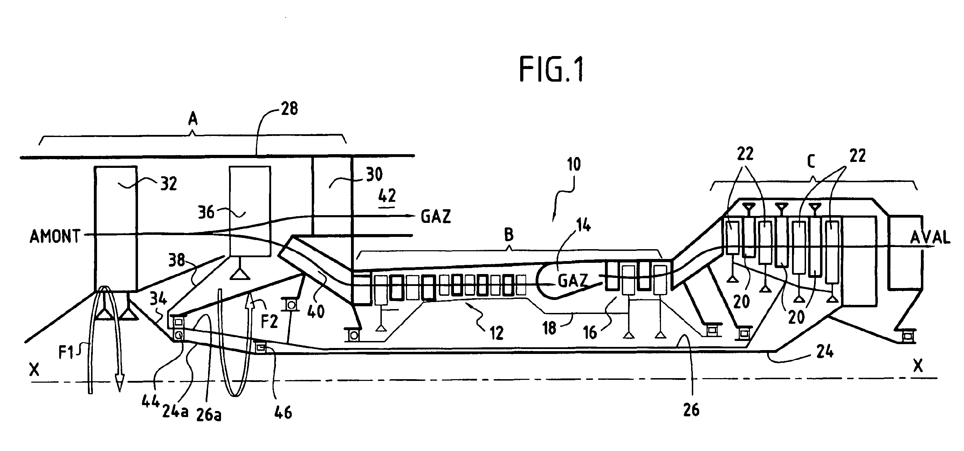

En liaison avec la figure 1, une turbomachine 10 à soufflantes contrarotatives comporte un axe longitudinal X-X. D'amont en aval, la turbomachine 10 se compose essentiellement de trois parties : un module avant A (ou section de soufflante), un module intermédiaire B (ou corps haute-pression) et un module arrière C (ou section de turbine basse-pression). La dénomination « amont » ou « aval » des éléments de la turbomachine est à interpréter en fonction du sens du flux de gaz dans celle-ci.

Les trois parties A, B et C de la turbomachine sont modulaires, c'est-à-dire qu'elles forment chacune un seul ensemble et peuvent être remplacées chacune en étant séparées des autres parties de la turbomachine.

De façon bien connue en soi, le corps haute-pression B comprend un générateur de gaz pour produire des gaz de combustion. Ce générateur de gaz se compose d'un compresseur 12, d'une chambre de combustion 14 et d'une turbine haute-pression 16.

L'air comprimé par le compresseur 12 est mélangé au carburant dans la chambre de combustion 14 avant d'y être brûlé. Les gaz de combustion ainsi produits entraînent les aubes mobiles de la turbine haute-pression 16 qui elle-même entraîne le compresseur 12 par l'intermédiaire d'un arbre haute-pression 18. La circulation des gaz de combustion dans la turbomachine 10 se fait axialement d'amont en aval.

La section de turbine basse-pression C comprend un premier rotor annulaire. Ce premier rotor se compose d'une rangée d'aubes mobiles de turbine 20 qui s'étendent radialement vers l'intérieur et qui sont espacées axialement les unes des autres.

La section de turbine basse-pression C comprend également un second rotor annulaire. Ce second rotor se compose d'une rangée d'aubes mobiles de turbine 22 qui s'étendent radialement vers l'extérieur et qui sont espacées axialement les unes des autres. Les aubes de turbine 20, 22 des premier et second rotors sont disposées en alternance les unes par rapport aux autres de sorte que le premier et le second rotors sont imbriqués l'un dans l'autre.

Les aubes mobiles de turbine 20 du premier rotor sont supportées en rotation par un premier arbre basse-pression 24. De même, les aubes mobiles de turbine 22 du second rotor sont supportées en rotation par un second arbre basse-pression 26 disposé de façon coaxiale autour du premier arbre 24. Les arbres basse-pression 24, 26 s'étendent axialement de l'amont vers l'aval de la turbomachine.

La section de turbine basse-pression C est traversée par les gaz de combustion provenant du corps haute-pression B. Ces gaz de combustion entraînent donc en rotation les aubes de turbine 20, 22 des premier et second rotors dans des sens opposés. Ainsi, les premier et second arbres basse-pression 24, 26 tournent également de façon contrarotative.

La section de soufflante A est située à l'avant de la turbomachine 10. Un capot 28 entoure de façon annulaire cette section de soufflante A. Le capot 28 est supporté par des entretoises 30 qui s'étendent radialement vers l'intérieur de la turbomachine.

La section de soufflante A comporte une première rangée d'aubes de soufflante 32 montées sur un arbre de soufflante avant 34 qui est relié à une extrémité amont 24a du premier arbre basse-pression 24. La section de soufflante A comporte également une seconde rangée d'aubes de soufflante 36 qui sont espacées axialement vers l'aval de la première rangée d'aubes de soufflante 32 et montées sur un arbre de soufflante arrière 38 relié à une extrémité amont 26a du second arbre basse-pression 26.

Les première et seconde rangées d'aubes de soufflante 32, 36 tournent ainsi dans des directions opposées qui sont représentées, à titre d'exemple, par les flèches respectives F1 et F2. Cette configuration à soufflantes contrarotatives confère ainsi à la turbomachine un rendement élevé pour une consommation spécifique relativement faible.

Les aubes de soufflante 32, 36 s'étendent radialement depuis les arbres de soufflante avant 34 et arrière 38 pratiquement jusqu'au capot 28. Elles sont disposées dans le passage de circulation de l'air alimentant à la fois la veine primaire 40 conduisant au compresseur 12 du corps haute-pression B et la veine secondaire 42 de contournement.

Au niveau de son extrémité 24a, le premier arbre basse-pression 24 supporte en rotation le second arbre basse-pression 26 par l'intermédiaire d'un premier palier à roulement 44 et d'un second palier à roulement 46 disposé en aval du premier.

Le premier palier à roulement 44 est du type à billes pour tenir aux charges axiales, tandis que le second palier à roulement 46 est du type à rouleaux pour tenir aux charges radiales de la turbomachine.

Bien qu'une telle configuration de turbomachine à soufflantes contrarotatives fonctionne en théorie, elle devient difficile à réaliser dans la pratique.

En effet, se pose notamment un problème de montage et de démontage de la turbomachine. Plus particulièrement, l'agencement du second arbre basse-pression 26 rend son montage impossible. Il en résulte également une impossibilité de monter ou démonter correctement la section de turbine basse-pression C sans avoir à toucher à la section de soufflante A.

Par ailleurs, une telle configuration ne permet pas d'alimenter correctement en huile de lubrification et de refroidissement les paliers à roulement 44, 46 qui supportent en rotation le second arbre basse-pression 26.

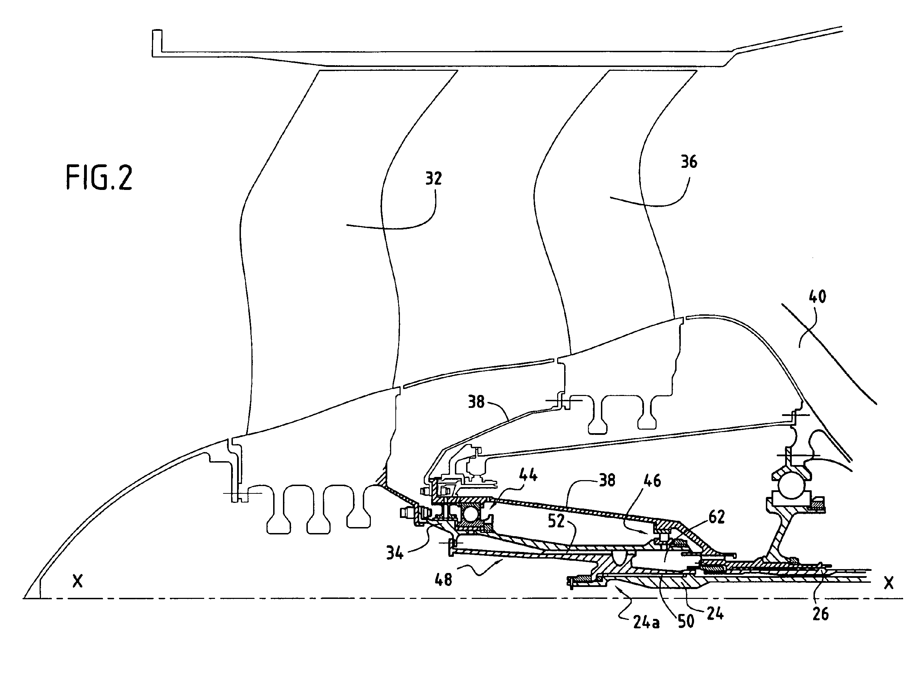

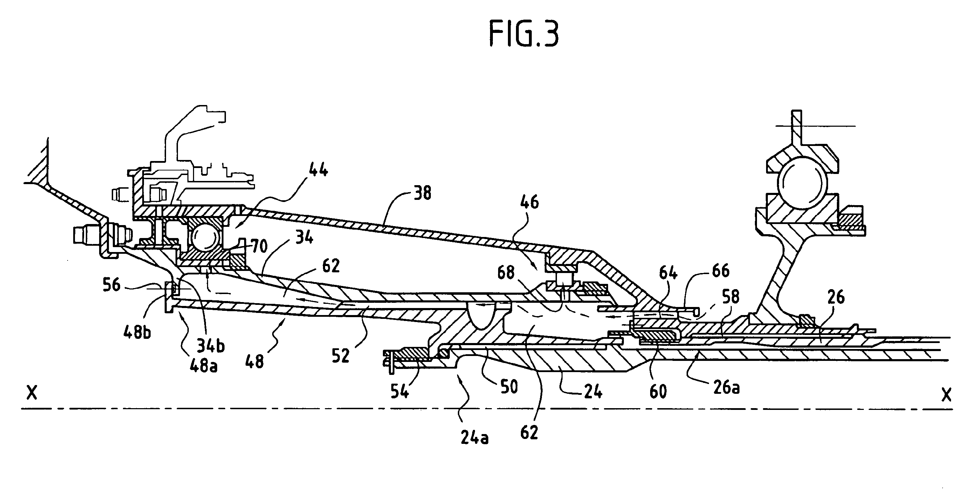

Selon l'invention, l'arbre de soufflante avant 34 est relié à l'extrémité amont 24a du premier arbre basse-pression 24 par l'intermédiaire d'un manchon démontable 48 de transmission de couple représenté sur les figures 2 et 3.

Un tel manchon est une portion de tube démontable qui est indépendante des arbres basse-pression 24, 26 et des arbres de soufflante 34, 38. En liaison avec les figures 2 et 3, le manchon démontable 48 est relié à l'extrémité 24a du premier arbre basse-pression 24 et à l'arbre de soufflante avant 34 par des systèmes respectifs de cannelures 50, 52 pour la transmission de couple.

De façon plus précise, le manchon démontable 48 est fixé sur le premier arbre basse-pression 24 par un écrou 54 serré sur l'extrémité amont 24a dudit premier arbre basse-pression. Un tel écrou 54 permet de réaliser un maintien axial du manchon 48 sur l'arbre basse-pression 24.

De préférence, le manchon démontable 48 présente également, à une extrémité amont 48a, une bride annulaire 48b qui est en appui axial avec un épaulement radial complémentaire 34b de l'arbre de soufflante avant 34. Dans ce cas, la bride annulaire 48b du manchon démontable 48 et l'épaulement radial complémentaire 34b de l'arbre de soufflante avant 34 sont maintenus en appui axial par un système de type vis/écrou 56.

Un joint torique (non représenté sur les figures) peut également être interposé entre ces deux éléments radiaux 48b, 34b afin d'assurer une parfaite étanchéité de l'ensemble.

L'arbre de soufflante arrière 38 est également entraîné en rotation par le second arbre basse-pression 26 par l'intermédiaire de cannelures 58. Il est par ailleurs fixé sur le second arbre basse-pression 26 par un écrou 60 serré sur l'extrémité amont 26a dudit second arbre basse-pression. Cet écrou 60 qui permet le maintien axial de l'arbre de soufflante arrière 38 sur le second arbre basse-pression 26 est accessible lorsque le manchon 48 est démonté.

En retirant l'écrou 54 et le système de vis/écrou 56 qui permettent le maintien axial du manchon 48 sur l'arbre de soufflante avant 34 et sur le premier arbre basse-pression 24, le manchon 48 peut être facilement démonté par l'avant. L'écrou 60 de maintien axial de l'arbre de soufflante arrière 38 sur le second arbre basse-pression 26 est alors accessible et peut être également facilement démonté.

De la sorte, toute la section de turbine basse-pression C (c'est-à-dire qui comporte notamment les premier et second arbres basse-pression 24, 26) peut être démontée (ou montée) par l'arrière sans avoir à démonter (ou monter) au préalable la section de soufflante A. Le montage et le démontage de la turbomachine se trouvent ainsi grandement simplifiés.

Selon une caractéristique avantageuse, le manchon démontable 48 et l'arbre de soufflante avant 34 forment une cavité annulaire d'alimentation en huile 62 pour la lubrification et le refroidissement des premier et second paliers à roulement 44, 46 qui sont montés entre les arbres de soufflante avant 34 et arrière 38. En d'autres termes, la cavité 62 est délimitée radialement entre la manchon démontable 48 et l'arbre de soufflante avant 34.

La cavité 62 est alimentée en huile par une pluralité d'orifices 64 pratiqués dans l'arbre de soufflante arrière 38 au niveau de l'écrou 60 de maintien axial de cet arbre de soufflante arrière. L'huile est projetée au moyen d'un gicleur (non représenté) et une écope 66 permet de diriger l'huile dans les orifices 64.

Sous l'effet de la force centrifuge, l'huile présente dans la cavité d'alimentation en huile 62 emprunte alors des perçages 68 pratiqués dans l'arbre de soufflante avant 34, s'ouvrant dans la cavité d'alimentation en huile et débouchant au niveau des pistes de roulement du second palier 46.

Par ailleurs, l'huile présente dans la cavité d'alimentation en huile 62 se propage vers l'amont par gravité, par exemple en cheminant au travers des cannelures 52 entre le manchon démontable 48 et l'arbre de soufflante avant 34. Alternativement, l'huile pourrait se propager vers l'amont en empruntant des orifices pratiqués à cet effet dans le manchon démontable 48 (non représentés sur les figures).

Sous l'effet de la force centrifuge, l'huile présente en amont emprunte alors des perçages 70 pratiqués dans l'arbre de soufflante avant 34, s'ouvrant dans la cavité d'alimentation en huile 62 et débouchant au niveau des pistes de roulement du premier palier 44.

De la sorte, il est possible d'alimenter correctement en huile de lubrification et de refroidissement les premier et second paliers à roulement 44, 46 qui sont montés entre les arbres de soufflante avant 34 et arrière 38.

On remarquera que le joint torique (non représenté) qui peut être interposé entre la bride annulaire 48b du manchon démontable 48 et l'épaulement radial complémentaire 34b de l'arbre de soufflante avant 34 permet d'assurer une parfaite étanchéité de la cavité d'alimentation en huile 62.

On notera que la présente invention ne se limite pas à la forme particulière du manchon démontable 48 telle qu'illustrée sur les figures 2 et 3, mais qu'elle englobe toutes les variantes possibles de manchon démontable facilitant le montage et le démontage de la section de turbine d'une turbomachine à soufflantes contrarotatives.

## Revendications

1. Turbomachine (10) comprenant :
un générateur de gaz (12, 14, 16) pour produire des gaz de combustion ;
une section de turbine (C) qui est traversée par les gaz de combustion et qui comporte des premières et secondes rangées d'aubes mobiles de turbine contrarotatives (20, 22) entraînant en rotation des premier (24) et second (26) arbres basse-pression, respectivement ; et
une section de soufflante (A) comportant une première rangée d'aubes de soufflante (32) montées sur un arbre de soufflante avant (34) qui est relié à une extrémité amont (24a) du premier arbre basse-pression (24), et une seconde rangée d'aubes de soufflante (36) espacées axialement de la première rangée et montées sur un arbre de soufflante arrière (38) qui est fixé sur une extrémité amont (26a) du second arbre basse-pression (26) par l'intermédiaire d'un écrou (60) ;
**caractérisée en ce que** l'arbre de soufflante avant (34) est relié à l'extrémité amont (24a) du premier arbre basse-pression (24) par l'intermédiaire d'un manchon (48) de transmission de couple qui est démontable sans avoir à démonter au préalable les arbres de soufflante (34, 38), et **en ce que** l'écrou (60) de fixation de l'arbre de soufflante arrière (38) sur le second arbre basse-pression (26) est accessible lorsque ledit manchon (48) est démonté.

2. Turbomachine selon la revendication 1, **caractérisée en ce que** le manchon démontable (48) et l'arbre de soufflante avant (34) forment une cavité d'alimentation en huile (62) pour la lubrification et le refroidissement de paliers à roulement (44, 46) montés entre les arbres de soufflante avant (34) et arrière (38).

3. Turbomachine selon l'une des revendications 1 et 2, **caractérisée en ce que** le manchon démontable (48) est relié à l'extrémité amont (24a) du premier arbre basse-pression (24) et à l'arbre de soufflante avant (34) par des systèmes de cannelures (50, 52).

4. Turbomachine selon l'une quelconque des revendications 1 à 3, **caractérisée en ce que** le manchon démontable (48) est fixé sur le premier arbre basse-pression (24) par un écrou (54) serré sur l'extrémité amont (24a) dudit premier arbre basse-pression.

5. Turbomachine selon l'une quelconque des revendications 1 à 4, **caractérisée en ce que** le manchon démontable (48) présente, à une extrémité amont (48a), une bride annulaire (48b) en appui axial avec un épaulement radial complémentaire (34b) de l'arbre de soufflante avant (34).

6. Turbomachine selon la revendication 5, **caractérisée en ce que** la bride annulaire (48b) du manchon démontable (48) et l'épaulement radial complémentaire (34b) de l'arbre de soufflante avant (34) sont maintenus en appui axial par un système de vis/écrou (56).

7. Turbomachine selon l'une quelconque des revendications 1 à 6, **caractérisée en ce que** l'arbre de soufflante arrière (38) est fixé sur le second arbre basse-pression (26) par un écrou (60) serré sur l'extrémité amont (26a) dudit second arbre basse-pression et accessible lorsque ledit manchon (48) est démonté.

## Claims

1. A turbomachine (10) comprising:
a gas generator (12, 14, 16) for producing combustion gas;
a turbine section (C) through which the combustion gas passes and comprising first and second rows of contrarotating turbine rotor blades (20, 22) respectively driving first and second low-pressure shafts (24, 26) in rotation;
a fan section (A) comprising a first row of fan blades (32) mounted on a front fan shaft (34) that is connected to an upstream end (24a) of the first low-pressure shaft (24), and a second row of fan blades (36) axially offset from the first row and mounted on a rear fan shaft (38) that is connected to an upstream end (26a) of the second low-pressure shaft (26) via a nut (60); and
the turbomachine being **characterised in that** the front fan shaft (34) is connected to the upstream end (24a) of the first low-pressure shaft (24) via a torque transmitting sleeve (48) which is removable without having to previously remove the fan shafts (34, 38), and **in that** the nut (60) for fastening the rear fan shaft (38) to the second low-pressure shaft (26) is accessible once said sleeve (48) has been removed.

2. A turbomachine according to claim 1, **characterised in that** the removable sleeve (48) and the front fan shaft (34) form an oil feed cavity (62) for lubricating and cooling bearings (44, 46) mounted between the front and rear fan shafts (34, 38).

3. A turbomachine according to claim 1 or claim 2, **characterised in that** the removable sleeve (48) is connected to the upstream end (24a) of the first low-pressure shaft (24) and to the front fan shaft (34) by fluting systems (50, 52).

4. A turbomachine according to any one of claims 1 to 3, **characterised in that** the removable sleeve (48) is fastened to the first low-pressure shaft (24) by a nut (54) tightened on the upstream end (24a) of said first low-pressure shaft.

5. A turbomachine according to any one of claims 1 to 4, **characterised in that** the removable sleeve (48) presents, at an upstream end (48a), an annular flange (48b) bearing axially against a complementary radial shoulder (34b) of the front fan shaft (34).

6. A turbomachine according to claim 5, **characterised in that** the annular flange (48b) of the removable sleeve (48) and the complementary radial shoulder (34b) of the front fan shaft (34) are held pressed axially against each other by a nut-and-bolt system (56).

7. A turbomachine according to any one of claims 1 to 6, **characterised in that** the rear fan shaft (38) is fixed on the second low-pressure shaft (26) by a nut (60) tightened on the upstream end (26a) of said second low-pressure shaft and accessible when said sleeve (48) is removed.

## Patentansprüche

1. Turbomaschine (10), umfassend:
einen Gaserzeuger (12, 14, 16) zur Erzeugung von Verbrennungsgasen;
einen Turbinenabschnitt (C), der von den Verbrennungsgasen durchströmt wird und der erste und zweite Reihen von gegenläufigen Turbinenlaufschaufeln (20, 22) umfaßt, die eine erste Niederdruckwelle (24) bzw. eine zweite Niederdruckwelle (26) drehantreiben; und
einen Gebläseabschnitt (A), der eine erste Reihe von Gebläseschaufeln (32), die an einer vorderen Gebläsewelle (34) angebracht sind, welche mit einem stromaufwärtigen Ende (24a) der ersten Niederdruckwelle (24) verbunden ist, sowie eine zweite Reihe von Gebläseschaufeln (36) umfaßt, die von der ersten Reihe axial beabstandet und an einer hinteren Gebläsewelle (38) angebracht sind, welche über eine Mutter (60) an einem stromaufwärtigen Ende (26a) der zweiten Niederdruckwelle (26) befestigt ist;
**dadurch gekennzeichnet, daß** die vordere Gebläsewelle (34) mittels einer Muffe (48) zur Drehmomentübertragung, die demontiert werden kann, ohne zuvor die Gebläsewellen (34, 38) demontieren zu müssen, mit dem stromaufwärtigen Ende (24a) der ersten Niederdruckwelle (24) verbunden ist, und daß die Mutter (60) zur Befestigung der hinteren Gebläsewelle (38) an der zweiten Niederdruckwelle (26) zugänglich ist, wenn die genannte Muffe (48) demontiert ist.

2. Turbomaschine nach Anspruch 1, **dadurch gekennzeichnet, daß** die demontierbare Muffe (48) und die vordere Gebläsewelle (34) einen Ölversorgungshohlraum (62) für die Schmierung und die Kühlung von Wälzlagern (44, 46) bilden, die zwischen der vorderen Gebläsewelle (34) und der hinteren Gebläsewelle (38) angebracht sind.

3. Turbomaschine nach einem der Ansprüche 1 und 2, **dadurch gekennzeichnet, daß** die demontierbare Muffe (48) mit dem stromaufwärtigen Ende (24a) der ersten Niederdruckwelle (24) und mit der vorderen Gebläsewelle (34) über Nutensysteme (50, 52) verbunden ist.

4. Turbomaschine nach irgendeinem der Ansprüche 1 bis 3, **dadurch gekennzeichnet, daß** die demontierbare Muffe (48) an der ersten Niederdruckwelle (24) durch eine Mutter (54) befestigt ist, die auf das stromaufwärtige Ende (24a) der ersten Niederdruckwelle aufgezogen ist.

5. Turbomaschine nach irgendeinem der Ansprüche 1 bis 4, **dadurch gekennzeichnet, daß** die demontierbare Muffe (48) an einem stromaufwärtigen Ende (48a) einen ringförmigen Flansch (48b) aufweist, der in axialer Anlage mit einer ergänzenden radialen Schulter (34b) der vorderen Gebläsewelle (34) ist.

6. Turbomaschine nach Anspruch 5, **dadurch gekennzeichnet, daß** der ringförmige Flansch (48b) der demontierbaren Muffe (48) und die ergänzende radiale Schulter (34b) der vorderen Gebläsewelle (34) durch ein Schraube-Mutter-System (56) in axialer Anlage gehalten werden.

7. Turbomaschine nach irgendeinem der Ansprüche 1 bis 6, **dadurch gekennzeichnet, daß** die hintere Gebläsewelle (38) an der zweiten Niederdruckwelle (26) durch eine Mutter (60) befestigt ist, die auf das stromaufwärtige Ende (26a) der zweiten Niederdruckwelle aufgezogen und zugänglich ist, wenn die genannte Muffe (48) demontiert ist.
